# EUROPÄISCHE PATENTANMELDUNG

(11) **EP 4 478 617 A1**
(43) Veröffentlichungstag der Anmeldung: **18.12.2024**
(21) Anmeldenummer: 24305790.8
(22) Anmeldetag: 22.05.2024
(51) Int. Cl.: H04B 3/54, H04L 12/28, H04M 11/02, H04N 7/18

(54) **KOMMUNIKATIONSSYSTEM FÜR EIN GEBÄUDE**

(30) Priorität: 30.05.2023 DE 102023114136
(71) Anmelder: SCHNEIDER ELECTRIC INDUSTRIES SAS, 92500 Rueil-Malmaison (FR)
(72) Erfinder: Steuwer, Dirk, 51469 Bergisch Gladbach (DE); Rittinghaus, Olaf, 58540 Meinerzhagen (DE); Kovác, Pavel, 769 01 Hole ov (CZ); Ning, Xu, ShenZhen, GuangDong, 518000 (CN)
(74) Vertreter: Manitz Finsterwald Patent- und Rechtsanwaltspartnerschaft mbB

(57) **Zusammenfassung**

Ein Kommunikationssystem für ein Gebäude weist eine Außenstation mit einer digitalen und/oder einer analogen Kommunikationseinheit und zumindest eine Innenstation mit einer digitalen und/oder einer analogen Kommunikationseinheit auf. Das Kommunikationssystem umfasst ferner eine Kommunikationsleitung, welche die Außenstation und Innenstation verbindet, wobei die Kommunikationsleitung zusätzlich als Energieversorgungsleitung dient. Eine Wandlereinheit, ist ausgebildet, von der analogen Kommunikationseinheit der Außenstation und/oder Innenstation erzeugte analoge Signale in digitale Signale umzuwandeln und/oder von der digitalen Kommunikationseinheit der Außenstation und/oder Innenstation erzeugte digitale Signale in analoge Signale umzuwandeln.

## Beschreibung

Die Erfindung betrifft ein Kommunikationssystem für ein Gebäude, insbesondere eine Türsprechanlage, sowie ein Verfahren zur Signalübertragung in einem Kommunikationssystem.

Heutige Türsprechanlagen, welche beispielsweise in Wohnkomplexen, Firmeneinrichtungen oder anderen Gebäuden verbaut sind, sollen steigenden Anforderungen gerecht werden. Neben Basisfunktionen, wie der Betätigung einer Klingel oder der Audiokommunikation zwischen einer Person im Inneren des Gebäudes und einer Person außerhalb des Gebäudes, sind in Türsprechanlagen vermehrt auch komplexe Funktionen, wie beispielsweise eine Videokommunikation, eine programmierbare Anzeige oder eine Fernüberwachung, z.B. mittels eines Mobiltelefons, erwünscht.

Um derartige komplexe Funktionen bereitstellen zu können, werden in Türsprechanlagen - anstelle von analogen Geräten bzw. Kommunikationseinheiten - digitale Geräte bzw. Kommunikationseinheiten eingesetzt, welche eine digitale Signalübertragung nutzen, um die mit diesen Funktionen einhergehende, erhöhte Datenmenge übertragen zu können. Der Einsatz solcher digitalen Geräte ist jedoch mit einem im Vergleich zu den herkömmlichen analogen Geräten erhöhten Kostenaufwand verbunden, welcher eine Umstellung auf ein digitales System erschwert. Ferner werden bei einer Umstellung auf ein digitales System die in einer Türsprechanlage bereits verbauten analogen Geräte, welche eine analoge Signalübertragung nutzen, unbrauchbar, obwohl diese aus technischer Sicht weiterhin funktionsfähig wären. Insbesondere können die digitalen Signale der digitalen Geräte bzw. die analogen Signale der analogen Geräte nicht von den analogen Geräten bzw. den digitalen Geräten verarbeitet werden. Daher besteht das Bedürfnis nach einem Kommunikationssystem, bei dem beispielsweise digitale Geräte in ein bestehendes Kommunikationssystem mit analogen Geräten integriert werden können und umgekehrt.

Es ist somit eine der Erfindung zugrundeliegende Aufgabe, ein Kommunikationssystem für ein Gebäude sowie ein Verfahren zur Signalübertragung in einem Kommunikationssystem bereitzustellen, bei denen eine Kompatibilität von analogen und digitalen Geräten bereitgestellt wird.

Diese Aufgabe wird durch Kommunikationssystem nach Anspruch 1 sowie ein Verfahren nach Anspruch 14 gelöst.

Erfindungsgemäß ist die Wandlereinheit ausgebildet, von der analogen Kommunikationseinheit der Außenstation und/oder Innenstation erzeugte analoge Signale in digitale Signale umzuwandeln und/oder von der digitalen Kommunikationseinheit der Außenstation und/oder Innenstation erzeugte digitale Signale in analoge Signale umzuwandeln, wobei die Wandlereinheit ferner ausgebildet ist, die umgewandelten analogen und/oder digitalen Signale über die Kommunikationsleitung an die Außenstation und/oder Innenstation zu übertragen. Somit ermöglicht die Wandlereinheit, dass digitale Kommunikationseinheiten mit analogen Kommunikationseinheiten kommunizieren bzw. Daten austauschen, indem die Wandlereinheit analoge Signale von analogen Kommunikationseinheiten in digitale Signale umwandelt und/oder digitale Signale von digitalen Kommunikationseinheiten in analoge Signale umwandelt. Dadurch kann eine analoge Kommunikationseinheit ein von einer digitalen Kommunikationseinheit erzeugtes Signal, insbesondere in umgewandelter Form, empfangen und verarbeiten. Entsprechend kann eine digitale Kommunikationseinheit ein von einer analogen Kommunikationseinheit erzeugtes Signal, insbesondere in umgewandelter Form, empfangen und verarbeiten. Dies ermöglicht es, analoge Kommunikationseinheiten und digitale Kommunikationseinheiten in demselben Kommunikationssystem zu verwenden.

Hierdurch ist es möglich, ein hybrides Kommunikationssystem bereitzustellen. Da in dem Kommunikationssystem analoge Kommunikationseinheiten mit digitalen Kommunikationseinheiten im selben System koexistieren können, können derartige Kommunikationssysteme flexibler gestaltet werden, da die digitalen Kommunikationseinheiten je nach Bedarf in ein System mit analogen Kommunikationseinheiten integriert werden können und umgekehrt, ohne dass es einer Umstellung des Kommunikationssystems auf ein einheitliches digitales bzw. analoges Kommunikationssystem mit ausschließlich digitalen bzw. analogen Kommunikationseinheiten bedarf. Insbesondere besteht keine Notwendigkeit, ein bestehendes analoges Verkabelungssystem durch ein weiteres, digitales Verkabelungssystem zu erweitern. Ferner ist es möglich, ein bereits bestehendes System mit der Wandlereinheit auszustatten, wodurch das System kompatibel sowohl mit analogen als auch digitalen Kommunikationseinheiten wird.

Die Außenstation des Kommunikationssystems umfasst beispielsweise den Teil der Türsprechanlage, der im Außenbereich des Gebäudes, beispielsweise an einer Eingangstüre bzw. Ausgangstüre des Gebäudes oder einer Wohnung, verbaut ist. Die Innenstation hingegen umfasst beispielsweise den Teil der Türsprechanlage, der im Innenbereich, beispielsweise in einer Wohneinheit, des Gebäudes verbaut ist. Insbesondere umfassen die Außenstation und Innenstation des Kommunikationssystems jeweils eine Kommunikationseinheit, welche sich in ihrer Art der Signalübertragung, d.h. analog oder digital, von der jeweiligen anderen Kommunikationseinheit unterscheidet. Bevorzugt sind analoge Kommunikationseinheiten und digitale Kommunikationseinheiten, welche dergleichen Station, d.h. Innenstation oder Außenstation, zugehörig sind, räumlich voneinander getrennt, d.h. es handelt sich um unterschiedliche, insbesondere eigenständige, Einheiten. Die umgewandelten analogen und/oder digitalen Signale umfassen insbesondere Audiosignale.

Die Außenstation und Innenstation können somit Kommunikationseinheiten unterschiedlicher Art, d.h. digital oder analog, beinhalten. Insbesondere kann die Au-βenstation bzw. Innenstation als Gesamtheit aller der Außenstation bzw. der Innenstation zugehörigen Kommunikationseinheiten verstanden werden. Wie bereits beschrieben, sind die analogen Kommunikationseinheiten ausgebildet, analoge Signale zu übertragen, zu empfangen und zu verarbeiten. Im Gegensatz hierzu sind die digitalen Kommunikationseinheiten ausgebildet, digitale Signale zu übertragen, zu empfangen und zu verarbeiten.

Der Begriff "empfangen" bezieht sich hierbei auf das Empfangen von Signalen von anderen Kommunikationseinheiten oder sonstigen Geräten. Eine digitale Kommunikationseinheit kann zwar auch ein analoges Signal, beispielsweise ein analoges Sprachsignal, über ein in der digitalen Kommunikationseinheit integriertes Mikrofon aufnehmen und für die weitere Verarbeitung mittels eines A/D-Wandlers in ein digitales Signal umwandeln oder ein von einer anderen Kommunikationseinheit empfangenes digitales Signal mittels eines D/A-Wandlers in ein analoges Sprachsignal umwandeln und über einen in der digitalen Kommunikationseinheit integrierten Lautsprecher ausgeben. Jedoch erfolgt die Signalübertragung zwischen der digitalen Kommunikationseinheit und anderen Kommunikationseinheiten via digitaler Signalübertragung. Die digitalen Kommunikationseinheiten, wie hierin beschrieben, sind somit grundsätzlich nicht für die Verarbeitung von analogen Signalen anderer, analoger Kommunikationseinheiten geeignet.

Die digitalen Kommunikationseinheiten der Außenstation umfassen beispielsweise eine Kamera, eine, insbesondere programmierbare, Anzeige, ein Touchdisplay und/oder ein Tastenfeld, insbesondere zum Anrufen einer Wohneinheit bzw. zum Betätigen einer Klingel.

Die digitalen Kommunikationseinheiten der Innenstation umfassen beispielsweise eine Kamera, eine, insbesondere programmierbare, Anzeige, ein Touchdisplay und/oder ein Tastenfeld, insbesondere zum Auswählen einer Aktion, beispielsweise zum Entriegeln einer Türe an der Außenstation oder zum Aufbauen einer Kommunikation zwischen Innenstation und Außenstation.

Die analogen Kommunikationseinheiten der Außenstation und/oder der Innenstation umfassen beispielsweise eine Gegensprechanlage, insbesondere ein Mikrofon und/oder einen Lautsprecher bzw. Hörer.

Ferner können auch die digitalen Kommunikationseinheiten der Außenstation und/oder Innenstation ein Mikrofon und/oder einen Lautsprecher bzw. Hörer umfassen, wobei in einem solchen Fall die durch das Mikrofon erzeugten analogen Signale mittels eines internen A/D-Wandlers in digitale Signale zur weiteren Verarbeitung bzw. die empfangenen digitalen Signale mittels eines internen D/A-Wandlers in analoge Signale zur Ausgabe über den Lautsprecher bzw. Hörer gewandelt werden.

Wie bereits ausgeführt erfolgt die Signalübertragung über eine Kommunikationsleitung, welche gleichzeitig als Energieversorgungsleitung dient. Beispielsweise wird über die Kommunikationsleitung mittels einer Spannungsquelle eine Gleichspannung von 36V angelegt. Zur Erzeugung der erforderlichen Spannung kann insbesondere ein Transformator verwendet werden. Insbesondere können alle Teilnehmer des Kommunikationssystems, d.h. die Außenstation, die Innenstation, die zugehörigen Kommunikationseinheiten und die Wandlereinheit, durch eine zentrale Spannungsquelle mit Energie versorgt werden. Alternativ können auch einzelne Teilnehmer des Kommunikationssystems dezentral mit Energie versorgt werden. Die Energieversorgung erfolgt vorzugsweise über einen zentralen Schaltschrank im Gebäude, wobei von dort sowohl Außen- wie auch Innenstationen mit Energie versorgt werden. Es ist aber auch denkbar, dass eine Einspeisung in der Außen- oder Innenstation möglich ist, wodurch entweder die Außen- oder Innenstation "dezentral", d.h. losgelöst von der zentralen Energieversorgung, bespeist wird, oder dass durch die Außen- oder Innenstation auch weitere Kommunikationseinheit des Systems versorgt werden. Dabei kann eine Maximalstromgrenze vorgesehen sein, welche abhängig von den jeweiligen Spezifikationen der Kommunikationseinheiten festgelegt sein kann, um eine Überlastung der Kommunikationseinheiten zu verhindern. Beispielsweise kann ein analoges Klingelknopfmodul der Außenstation mit einem Strom von 3 mA lauffähig sein, während hingegen ein digitales Touchdisplay mit einem Strom von 800 mA betrieben wird. Insbesondere kann die Stromaufnahme von der gewählten Versorgungsspannung abhängen. Die Signalübertragung kann ferner basierend auf einer Modulation der Spannung, beispielsweise unter Verwendung einer Gyratorschaltung, erfolgen. Signale unterschiedlicher Art, d.h. digital oder analog, oder Signale, welche unterschiedlichen Frequenzbereichen zugeordnet sind, können dabei mittels unterschiedlicher Gyratorschaltung moduliert werden.

Digitale Signale werden beispielsweise binär codiert und in Form von diskreten Impulsen, auch als Bits bezeichnet, übertragen. Dabei wird jeder Wert, der codiert werden soll, einer bestimmten Bitfolge zugewiesen. Diese Bitfolge wird dann als elektrisches Signal über die Kommunikationsleitung an den Empfänger gesendet. Zur Übertragung der Bits können verschiedene Modulationsverfahren eingesetzt werden, wie beispielsweise die Amplituden- oder Frequenzmodulation. Dabei wird ein analoges Signal in einer vorgegebenen Form moduliert, welche einem "0"-Bit oder einem "1"-Bit entsprechen kann. Beim Empfänger wird das empfangene analoge Signal in eine entsprechende Bitfolge umgewandelt und die empfangenen Bits wieder in die entsprechenden Werte dekodiert. Eine digitale Übertragung bietet im Vergleich zur analogen Übertragung den Vorteil, dass das Signal weniger anfällig für Störsignale ist und bei Bedarf einfach und präzise verstärkt, gefiltert oder bearbeitet werden kann.

Im Vergleich dazu werden analoge Signale in ihrer Basisbandform übertragen. Das bedeutet, das analoge Signale wird, insbesondere amplitudenmoduliert oder frequenzmoduliert, ohne jegliche Bitcodierung über die Kommunikationsleitung übertragen. Das beim Empfänger demodulierte Signal entspricht somit im Wesentlichen dem vom Sender abgesendeten Signal.

In dem vorliegenden Kommunikationssystem wird bei der Signalübertragung insbesondere zwischen drei unterschiedlichen Signaltypen unterschieden: Analoge Signale, z.B. analoge Audiosignale, digitale Telegrammsignale, z.B. Klingelsignale zur Erzeugung eines Klingeltons, und digitale Signale mit hoher Bandbreite, z.B. digitale Signale, welche einem Powerline-Kommunikationsstandard entsprechen. Signale mit hoher Bandbreite sind vorliegend beispielsweise Signale in einem Frequenzbereich zwischen 2 und 20 MHz. Aktuelle Kommunikationssysteme implementieren insbesondere Kommunikationsstandards, welche nur die Übertragung von analogen Signalen und digitalen Telegrammsignalen umfassen. Die digitalen Telegrammsignale umfassen insbesondere Signale, welche aufgrund ihrer geringen Informationsmenge nur eine geringe Bandbreite aufweisen. Beispielsweise umfasst das digitale Telegrammsignal eine Adressinformation, um die Au-βenstation mit einer gewünschten Innenstation zu verbinden.

Die analogen Kommunikationseinheiten können ferner ausgebildet sein, analoge Signale und/oder digitale Telegrammsignale zu empfangen und zu versenden, welche beispielsweise über ein entsprechendes analoges Modul, beispielsweise ein analoges Audiomodul, und ein entsprechendes Telegrammkommunikations-Modul verarbeitet werden. Die digitalen Kommunikationseinheiten können ferner ausgebildet sein, nur digitale Signale mit hoher Bandbreite zu empfangen und zu versenden. Die analogen Signale und die digitalen Telegrammsignale können insbesondere in digitale Signale mit hoher Bandbreite umgewandelt werden (und umgekehrt), sodass eine Signalübertragung im Wesentlichen rein digital erfolgt. Es ist zu beachten, dass analoge Signale der analogen Kommunikationseinheiten zusätzlich zu den umgewandelten digitalen Signalen weiterhin als analoge Signale an entsprechende analoge Kommunikationseinheiten übertragen werden können (Analog-zu-Analog-Übertragung) und digitale Signale der digitalen Kommunikationseinheiten zusätzlich zu den umgewandelten analogen Signalen weiterhin als digitale Signale an digitale Kommunikationseinheiten übertragen werden können (Digital-zu-Digital-Übertragung). Die analogen und digitalen Signale können insbesondere in unterschiedlichen Frequenzbereichen übertragen werden, um Interferenzen zu vermeiden.

Die Außenstation kann ferner ein Außenstationsmodul umfassen, welches die von der Kommunikationseinheit der Außenstation erzeugten Signale verarbeitet. Das Außenstationsmodul kann ferner Untermodule umfassen, welche jeweils einer Kommunikationseinheit der Außenstation zugehörig sind und die Signale der zugehörigen Kommunikationseinheiten verarbeiten. Beispielsweise können die Untermodule ein PLC-Modul, insbesondere HomePlug-Modul, für die Verarbeitung von digitalen Signalen von digitalen Kommunikationseinheiten, ein Telegrammkommunikations-Modul oder Anrufmodul zur Verarbeitung von Anruf- und Rückrufanfragen und/oder ein Audio-Codec-Modul zur Verarbeitung von Audiosignalen umfassen. Ferner kann das Außenstationsmodul einen Mikroprozessor umfassen, welcher zur Steuerung und Überwachung von Signalen einer digitalen Kommunikationseinheit der Außenstation vorgesehen ist. Zusätzlich oder alternativ kann die Innenstation ein entsprechendes Innenstationsmodul mit entsprechenden Untermodulen umfassen.

Weitere Ausführungsformen der Erfindung sind der Beschreibung, den Unteransprüchen sowie den Zeichnungen zu entnehmen.

Gemäß einer ersten Ausführungsform ist die Wandlereinheit als ein Teil der Au-βenstation oder Innenstation ausgebildet. Somit werden die von einer Kommunikationseinheit erzeugten analogen und/oder digitalen Signale nur an einem Punkt der Übertragungsstrecke, d.h. genau einmal, gewandelt. Dies hat den Vorteil, dass das Kommunikationssystem einfach aufgebaut ist, da nur ein A/D-Wandler bzw. D/A-Wandler benötigt wird. Ferner kann ein bereits bestehendes Kommunikationssystem auf einfache Weise nachgerüstet werden, da nur die Außenstation oder die Innenstation mit der Wandlereinheit nachgerüstet werden muss.

Gemäß einer weiteren Ausführungsform ist die Wandlereinheit als ein Teil der Au-βenstation ausgebildet ist, wobei zwischen der Außenstation und Innenstation oder in der Innenstation eine weitere Wandlereinheit angeordnet ist, welche ausgebildet ist, analoge Signale in digitale Signale umzuwandeln und/oder umgekehrt, wobei die Wandlereinheit und die weitere Wandlereinheit ausgebildet sind, sich gegenseitig, insbesondere nur, digitale Signale zu übermitteln, wobei die weitere Wandlereinheit ausgebildet ist, an die digitale Kommunikationseinheit der Innenstation digitale Signale zu übertragen und/oder an die analoge Kommunikationseinheit der Innenstation analoge Signale zu übertragen.

Die Kommunikation zwischen der Außenstation, insbesondere der Wandlereinheit, mit der weiteren Wandlereinheit erfolgt somit rein digital. Dies hat den Vorteil, dass ein potentielles Eingreifen in die Übertragung von Signalen der Außenstation durch einen Dritten verhindert bzw. erschwert wird und die Übertragung von analogen Signalen nur über Leitungen erfolgt, welche sich in einem Innenbereich des Gebäudes befinden. Für den Fall, dass die weitere Wandlereinheit in der Innenstation angeordnet ist, werden die Signale von der Außenstation bis zur Innenstation und umgekehrt rein digital übertragen. In beiden vorstehenden Fällen wird eine hohe Sicherheit der Kommunikation erreicht. Die Wandlereinheit und/oder die weitere Wandlereinheit können jeweils ein Powerline-Kommunikationsmodul (PLC-Modul) umfassen, welches ausgebildet ist, die Signalübertragung in Richtung der jeweils anderen Wandlereinheit auf eine digitale Signalübertragung zu begrenzen. Grundsätzlich kann jede geeignete OFDM (Orthogonal Frequency-Division Multiplexing) modulierende Digitaltechnik, z.B. DSL, PLC oder andere proprietäre Techniken, verwendet werden, die sich auf einen Frequenzbereich beschränken lässt. Die Signalübertragung in Richtung der jeweils anderen Wandlereinheit kann ferner vorgebebenen Sicherheitsbestimmungen unterliegen, welche insbesondere durch den Übertragungsstandard festgelegt sein können.

Gemäß einer weiteren Ausführungsform wird zumindest ein Teil der digitalen Signale einem Powerline-Kommunikations-Standard (PLC-Standard) entsprechend über die Kommunikationsleitung übertragen. Grundsätzlich wird bei einer Powerline-Kommunikation vorhandene elektrische Leitungen zum Aufbau eines lokalen Netzwerks zur Datenübertragung genutzt. Insbesondere erfolgt die Übertragung der digitalen Signale zwischen der Wandlereinheit und der weiteren Wandlereinheit ausschließlich unter Verwendung des Powerline-Kommunikations-Standard. Beispielsweise werden die die digitalen Signale einem HomePlug-Standard entsprechend über die Kommunikationsleitung übertragen. Beispielsweise wird HomePlug 1.0, HomePlug AV, HomePlug AV2 oder HomePlug Green PHY genutzt. Alternativ kann auch ein Kommunikationsstandard wie beispielsweise HD-PLC (High Definition Power Line Communication) Version 1.0 bis 4.0 oder G.hn (Gigabit home networking) verwendet werden. Dies führt dazu, dass die Datenübertragung besonders robust und sicher ist. Beispielsweise werden verschiedene Sicherheitsprotokolle wie AES-Verschlüsselung und Authentifizierung verwendet, um sicherzustellen, dass nur autorisierte Geräte auf das Netzwerk zugreifen können. Diese Protokolle können das Risiko von unbefugtem Zugriff und Datenverlust reduzieren. Da es sich beim HomePlug-Standard um einen Powerline-Kommunikations-Standard handelt, ist die Signalübertragung außerdem, beispielsweise im Vergleich zu einer drahtlosen Kommunikation, weniger anfällig für durch andere Geräte verursachte Interferenzen. Zwischen der weiteren Wandlereinheit und der Kommunikationseinheit der Innenstation kann je nach Art der Kommunikationseinheit, d.h. analog oder digital, die Signalübertragung einem Powerline-Kommunikations-Standard entsprechend und/oder einem anderen Kommunikationsstandard für eine Signalübertragung über eine 2-Draht-Leitung, insbesondere zur Verbindung von verschiedenen Geräten in einem Gebäude, entsprechend erfolgen.

Die Außenstation, Innenstation und/oder die weitere Wandlereinheit können ferner sogenannte PLC-Module, insbesondere HomePlug-Module, umfassen, welche als Schnittstelle zwischen dem 2-Draht-Leitung und den Daten dienen, die über die 2-Draht-Leitung übertragen werden sollen. Das PLC-Modul kann einen PLC-Chip, einen Mikrocontroller, einen Spannungsregler und weitere Komponenten umfassen, die für eine stabile und zuverlässige Übertragung der Daten über die 2-Draht-Leitung erforderlich sind.

Gemäß einer weiteren Ausführungsform umfasst die Kommunikationsleitung zwischen der weiteren Wandlereinheit und der analogen Kommunikationseinheit der Innenstation eine erste Übertragungsleitung und/oder zwischen der weiteren Wandlereinheit und der digitalen Kommunikationseinheit der Innenstation eine zweite Übertragungsleitung, wobei die weitere Wandlereinheit ausgebildet ist, über die erste Übertragungsleitung, insbesondere nur, analoge Signale und digitale Telegrammsignale zu übertragen und zu empfangen, und über die zweite Übertragungsleitung, insbesondere nur, digitale Signale, welche einem Powerline-Kommunikations-Standard entsprechen, zu übertragen und zu empfangen.

Dementsprechend erfolgt die Übertragung der analogen und digitalen Signale zwischen der weiteren Wandlereinheit und der analogen bzw. digitalen Kommunikationseinheit separat (sog. Splitting). Die Signalübertragung über die erste Übertragungsleitung erfolgt beispielsweise einem für analoge Kommunikationseinheiten bekannten Kommunikationsstandard für eine Signalübertragung über eine 2-Draht-Leitung, während die Signalübertragung über die zweite Übertragungsleitung einem für digitale Kommunikationseinheiten bekannten Kommunikationsstandard, z.B. PLC-Standard, entsprechend erfolgt. Insbesondere kann die weitere Wandlereinheit Submodule umfassen, welche für die Übertragung der "gesplitteten" Signale über eine jeweilige Übertragungsleitung zuständig sind. Ein Submodul kann beispielsweise für die Übertragung eines digitalen oder analogen Signals in einem zugehörigen Frequenzbereich zuständig sein. Eine derartige Ausgestaltung der Kommunikationseinheit hat den Vorteil, dass die analogen und digitalen Kommunikationseinheiten der Innenstation das ankommende Übertragungssignal nicht filtern müssen, um das für die entsprechende Kommunikationseinheit relevante digitale oder analoge Signal zu extrahieren. Vielmehr liegen die Signale bereits in einer Form vor, in der sie direkt von der jeweiligen Kommunikationseinheit verarbeitet werden können. In einem solchen Fall können für eine vorgegebene Anzahl an Kommunikationseinheiten sämtliche, d.h. sowohl digitale als auch analoge, Kommunikationseinheiten der Innenstation und Außenstation über eine zentrale Energieversorgung versorgt werden.

Gemäß einer weiteren Ausführungsform umfasst die weitere Wandlereinheit ein erstes Modul und ein zweites Modul, wobei das erste Modul ausgebildet ist, digitale Signale an die Innenstation, die Außenstation und an das zweite Modul zu übertragen, wobei das zweite Modul ausgebildet ist, von dem ersten Modul empfangene digitale Signale in analoge Signale zu wandeln und an die Innenstation zu übertragen und von der Innenstation empfangene analoge Signale in digitale Signale zu wandeln. Insbesondere kann das zweite Modul als ansteckbares bzw. absteckbares Modul vorgesehen sein, welches je nach Bedarf an die weitere Wandlereinheit angesteckt bzw. von dieser abgesteckt werden kann. Beispielsweise wird das zweite Modul in einem Fall, in dem die Innenstation keine analogen Kommunikationseinheiten umfasst, für die Signalübertragung nicht benötigt, da die digitale Signalübertragung der digitalen Kommunikationseinheiten allein über das erste Modul erfolgen kann. Wenn die Innenstation jedoch eine analoge Kommunikationseinheit umfasst, kann das zweite Modul einfach angesteckt bzw. nachgerüstet werden, sodass von dem ersten Modul empfangene digitale Signale in analoge Signale gewandelt werden und an die jeweilige analoge Kommunikationseinheit übermittelt werden. Umgekehrt können in diesem Fall auch die analogen Signale der analogen Kommunikationseinheit von dem zweiten Modul in digitale Signale gewandelt, dem ersten Modul übermittelt und von dem ersten Modul an die Außenstation gesendet werden. Das Kommunikationssystem kann somit den Anforderungen entsprechend angepasst werden.

Gemäß einer weiteren Ausführungsform sind das erste und zweite Modul ausgebildet und eingerichtet, über eine Ethernet-Verbindung gegenseitig digitale Signale zu übertragen. Beispielsweise verfügen das erste und zweite Modul über eine hierfür erforderliche Ethernet-Schnittstelle. Die Signalübertragung zwischen dem ersten und zweiten Modul ist in diesem Fall durch ein hohe Übertragungsrate, eine geringe Latenzzeit sowie eine hohe Zuverlässigkeit der Signalübertragung gekennzeichnet.

Gemäß einer weiteren Ausführungsform umfasst das Kommunikationssystem ferner eine Mehrzahl von Innenraum-Kommunikationseinrichtungen, welche einer Innenstation zugeordnet sind, wobei die weitere Wandlereinheit ausgebildet ist, als Kommunikationsschnittstelle die Innenraum-Kommunikationseinrichtungen miteinander zu verbinden. Insbesondere kann die weitere Wandlereinheit ein Ethernet-Gateway als Kommunikationsschnittstelle umfassen, um eine interne Kommunikation zwischen einer Mehrzahl von Innenraum-Kommunikationseinrichtungen bereitzustellen. Die Innenraum-Kommunikationseinrichtungen können beispielsweise einer Innenstation zugeordnete Substationen darstellen, welche mit der Innenstation in Verbindung stehen können. Beispielsweise kann eine Innenraum-Kommunikationseinrichtung, über die Innenstation oder direkt, mit einer Außenstation in Verbindung stehen, sodass eine ein Nutzer innerhalb eines Gebäudes über unterschiedliche Einrichtungen, d.h. Innenstation oder Innenraum-Kommunikationseinrichtungen, mit einem Nutzer außerhalb des Gebäudes in Kontakt treten kann. Ferner können über die Innenraum-Kommunikationseinrichtungen mehrere Personen innerhalb des Gebäudes oder einer Wohneinheit miteinander kommunizieren.

Gemäß einer weiteren Ausführungsform ist eine zentrale Energieversorgung ausgebildet, die analoge Kommunikationseinheit der Außenstation und/oder Innenstation mit Energie zu versorgen, wobei die digitale Kommunikationseinheit der Au-βenstation und/oder die digitale Kommunikationseinheit der Innenstation mit einer jeweiligen lokalen Energieversorgungseinheit ausgestattet ist, welche ausgebildet ist, die zugehörige digitale Kommunikationseinheit mit Energie zu versorgen. Beispielsweise kann der Energiebedarf einer digitalen Kommunikationseinheit eine vorgegebene Energiekapazität der zentralen Energieversorgung überschreiten, sodass die digitale Kommunikationseinheit lokal mit Energie versorgt werden muss. Alternativ können die digitalen Kommunikationseinheiten auch mittels einer gemeinsamen Energieversorgung versorgt werden, welche nur den digitalen Kommunikationseinheiten zugehörig ist. Durch die dezentrale bzw. separate Energieversorgung der digitalen Kommunikationseinheiten ist es möglich, dass neben der digitalen Signalübertragung zugleich die analoge Signalübertragung und/oder die nicht PLC-konforme Signalübertragung aufmoduliert wird, welche in der Regel eine Spannungsmodulation benötigt, die mit einer klassischen Gleichstromspannungsversorgung, die beispielsweise für die Energieversorgung der digitalen Kommunikationseinheiten erforderlich ist, nicht kompatibel ist.

Gemäß einer weiteren Ausführungsform umfasst die Kommunikationsleitung eine 2-Draht-Leitung. Insbesondere erfolgt über die 2-Draht-Leitung sowohl die Signalübertragung als auch die Energieversorgung. Hierfür wird beispielsweise ein zu übertragendes Signal mittels des HomePlug-Standards auf die 2-Draht-Leitung, insbesondere mittels einer Spannungsmodulation, aufmoduliert und als digitales Signal übertragen. Zusätzlich können über die 2-Draht-Leitung auch parallel analoge Signale übertragen werden. Die Verwendung von 2-Draht-Leitungen in Türsprechanlagen bzw. -systemen ist bereits weit verbreitet. Folglich kann die Erfindung auf einfache Weise in bereits bestehenden Systemen eingesetzt werden. Eine mit hohen Kosten verbundene Umstrukturierung der Türsprechanlage, beispielsweise einer bestehenden 2-Draht-Leitung der Türsprechanlage, ist somit nicht notwendig. Beispielsweise kann eine bestehende Verkabelung wie z.B. eine bei Telefonleitungen häufig verwendete J-Y(ST)Y-Verkabelung (Jumper-Yellow (Shielded) Twisted Pair-Verkabelung) oder eine Cat5- oder Cat6-Verkabelung verwendet werden.

Gemäß einer weiteren Ausführungsform ist die Wandlereinheit ausgebildet, die von der Kommunikationseinheit der Außenstation empfangenen Signale als digitale Signale in einem Frequenzbereich von 2 bis 20 MHz zu übertragen. Beispielsweise ist die Wandlereinheit ausgebildet, analoge Signale in digitale Signale in einem Frequenzbereich von 2 MHz bis 20MHz zu wandeln und digitale Signale außerhalb des Frequenzbereichs von 2 MHz bis 20MHz, beispielsweise digitale Telegrammsignale, in digitale Signale zu übersetzen, welche innerhalb des Frequenzbereichs von 2 MHz bis 20MHz liegen. Insbesondere können die von der Wandlereinheit übermittelten digitalen Signale per Powerline-Kommunikation, insbesondere mittels der HomePlug-Technologie, übertragen werden. Hierfür kann beispielsweise ein PLC-Adapter oder ein HomePlug-Adapter verwendet werden.

Ein weiterer Aspekt der Erfindung betrifft ein Verfahren zur Signalübertragung in einem Kommunikationssystem für ein Gebäude, das umfasst, dass von zumindest einer analogen Kommunikationseinheit zumindest einer Außenstation und/oder zumindest einer Innenstation erzeugte analoge Signale in digitale Signale umgewandelt werden und von zumindest einer digitalen Kommunikationseinheit der Außenstation und/oder Innenstation erzeugte digitale Signale in analoge Signale umgewandelt werden und die umgewandelten analogen und/oder digitalen Signale über zumindest eine Kommunikationsleitung zwischen der Außenstation und der Innenstation übertragen werden.

Die Ausführungsformen des erfindungsgemäßen Kommunikationssystems gelten für das Verfahren entsprechend.

Gemäß einer weiteren Ausführungsform werden die digitalen und analogen Signale, insbesondere gleichzeitig, über die Kommunikationsleitung in unterschiedlichen Frequenzbereichen übertragen. Insbesondere überschneiden sich die jeweiligen Frequenzbereiche nicht. Hierdurch wird eine Interferenz der Signale vermieden und das Auslesen der Signale an einem entsprechenden Empfänger erleichtert. Insbesondere werden die digitalen Signale in einem Frequenzbereich von 2 MHz bis 20 MHz sowie 8 kHz bis 16 kHz übertragen und die analogen Signale in einem Frequenzbereich von 100 Hz bis 3000 Hz übertragen. Für die Übertragung der digitalen Signale im Frequenzbereich von 2 MHz bis 20 MHz kann beispielsweise der HomePlug-Standard genutzt werden, während für die Übertragung der digitalen Signale im Frequenzbereich von 8 kHz bis 16 kHz, z.B. der digitalen Telegrammsignale, und der analogen Signale in einem Frequenzbereich von 100 Hz bis 3000 Hz, z.B. der analogen Audiosignale, ein geeigneter Kommunikations-standard für analoge Telefonsystemkommunikation, beispielsweise der TwinBus-Standard, genutzt werden kann. Der rein beispielhaft genannte TwinBus-Standard ist ein Kommunikationsstandard, insbesondere Bussystem, das in der Gebäudeautomation eingesetzt wird. Dabei handelt es sich um ein Bussystem, das zur Übertragung von Signalen zwischen verschiedenen Geräten und Systemen in einem Gebäude verwendet wird. Grundsätzlich kann jedoch jeder geeignete Kommunikationsstandard zur Übertragung der jeweiligen Signale genutzt werden.

Die vorstehend verwendeten Begriffe Kommunikationseinheit und Signal beziehen sich, falls nicht näher spezifiziert, auf eine analoge und/oder digitale Kommunikationseinheit bzw. analoge und/oder digitale Signale. Zur Vereinfachung und besseren Lesbarkeit wurden die Begriffe "analog und/oder digital" stellenweise weggelassen.

Es ist zu verstehen, dass jede beliebige Kombination der vorstehenden und nachstehenden Ausführungsformen, falls nicht explizit ausgeschlossen, möglich und von der vorliegenden Offenbarung umfasst ist.

Unter Bezugnahme auf die Zeichnungen werden nachfolgend weitere Ausführungsformen der Erfindung beschrieben. Es zeigen:
- Fig. 1: ein erste Ausführungsform einer Türsprechanlage
- Fig. 2: eine zweite Ausführungsform einer Türsprechanlage
- Fig. 3: eine dritte Ausführungsform einer Türsprechanlage
- Fig. 4: eine vierte Ausführungsform einer Türsprechanlage
- Fig. 5: eine fünfte Ausführungsform einer Türsprechanlage

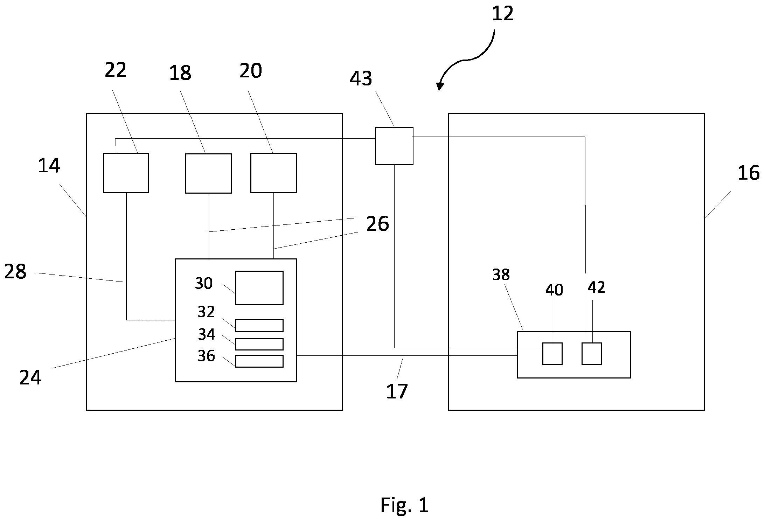

Fig. 1 zeigt eine erste Ausführungsform einer Türsprechanlage 12. Die Türsprechanlage 12 umfasst eine Außenstation 14 und eine Innenstation 16, welche über eine 2-Draht-Leitung 17 in Verbindung stehen. Die Außenstation 14 umfasst ferner eine analoge Außenbereichssprechanlage 18, die ein nicht gezeigtes Mikrofon und einen nicht gezeigten Lautsprecher umfasst, ein analoges Tastenfeld 20 und eine digitale Kamera 22, wobei die analoge Außenbereichssprechanlage 18 und das analoge Tastenfeld 20 für eine analoge Signalübertragung und die digitale Kamera 22 für eine digitale Signalübertragung eingerichtet sind. Die Außenstation 14 umfasst außerdem ein Außenstationsmodul 24, welches mit der analogen Außenbereichssprechanlage 18, dem analogen Tastenfeld 20 und der digitalen Kamera 22 elektrisch verbunden ist. Die analoge Innenbereichssprechanlage 8 und das analoge Tastenfeld 20 sind über analoge Leitungen 26 mit dem Außenstationsmodul 24 verbunden, wohingegen die digitale Kamera 22 über eine USB-Verbindung 28 mit dem Außenstationsmodul 24 verbunden ist. Das Außenstationsmodul 24 umfasst ferner eine Wandlereinheit 30 zur A/D-Wandlung und D/A-Wandlung von Signalen sowie ein PLC-Modul 32, ein Anrufmodul 34 sowie ein Audiomodul 36. Die Innenstation 16 umfasst ferner eine digitale Innenbereichssprechanlage 38 einschließlich einer digitalen Anzeige 40, eines Touchdisplays 42 und eines nicht gezeigten Lautsprechers und eines nicht gezeigten Mikrofons. Während die analogen Geräte wie beispielsweise die analoge Außenbereichssprechanlage 18 oder das analoge Tastenfeld 20 über eine nicht gezeigte zentrale Energieversorgungseinheit, z.B. eine zentrale Spannungsversorgung, mit Energie versorgt werden, werden die digitalen Geräte wie die digitale Kamera 22 sowie die digitale Innenbereichssprechanlage 38 bzw. die digitale Anzeige 40 und das Touchdisplay 42 über eine den digitalen Geräten zugehörige externe Spannungsversorgung 43, z.B. eine Gleichstromspannungsversorgung, mit Energie versorgt. Alternativ ist es auch möglich, dass die digitalen Geräte durch jeweilige lokale Spannungsversorgungseinheiten mit Energie versorgt werden. Die externe Spannungsversorgung 43 ist in den weiteren Figuren zur Vereinfachung nicht dargestellt.

Möchte ein im Außenbereich befindlicher Nutzer der Türsprechanlage 12 eine Kommunikation zwischen der Außenstation 14 des Gebäudes und der Innenstation 16, beispielsweise einer Wohneinheit des Gebäudes, herstellen, kann dieser über das analoge Tastenfeld 20 eine Kommunikation und insbesondere eine Signalübertragung starten. Der Nutzer kann über das Tastenfeld 20 eine Taste betätigen, welche einer entsprechenden Innenstation 16 einer Wohneinheit zugeordnet ist. In Reaktion auf das Betätigen der Taste wird ein digitales Anrufsignal erzeugt, welches an das Außenstationsmodul 24 übermittelt wird. Das digitale Anrufsignal wird über die 2-Draht-Leitung 17 mittels des PLC-Moduls 32 an die Innenstation 16 und die digitale Innenbereichssprechanlage 38 übermittelt, wobei in Reaktion auf das Anrufsignal über die Lautsprecher der Innenbereichssprechanlage ein Klingelton erzeugt wird, um einen Nutzer in der Wohneinheit anzuzeigen, dass der Nutzer im Außenbereich eine Kommunikation starten möchte. Die Wandlereinheit 30, insbesondere das Anrufmodul 34, oder das PLC-Modul 32 kann das digitale Anrufsignal insbesondere in eine für die Übertragung durch das PLC-Modul 32 geeignete Form, d.h. eine einem PLC-Standard entsprechende Form, bringen. Dies kann bedeuten, dass das digitale Anrufsignal in ein Signal in einem höheren Frequenzbereich übersetzt wird. Der Nutzer in der Wohneinheit kann daraufhin ein digitales Anrufannahmesignal durch eine entsprechende Rückmeldung, beispielsweise durch Betätigen des Touchdisplays 42, erzeugen, welches wiederum dem PLC-Standard entsprechend an die Außenstation 14 übermittelt wird. In Reaktion auf das Empfangen des digitalen Anrufannahmesignals an der Außenstation 14, werden die digitale Kamera 22 und die analoge Außensprechanlage 18 aktiviert und übertragen jeweilige digitale Signale, beispielsweise Bilddaten der digitalen Kamera 22, und analoge Signale, beispielsweise Audiosignale, an das Außenstationsmodul 24. Die Wandlereinheit 30 des Außenstationsmoduls 24 wandelt die empfangenen analogen Signale mittels eines A/D-Wandlers in digitale Signale um und überträgt sowohl die digitalen Signale der digitalen Kamera 22 als auch die von analog-zu-digital gewandelten Signale der analogen Außensprechanlage 18 mittels des PLC-Moduls 32 über die 2-Draht-Leitung 17 an die Innenstation 16. Für die jeweiligen digitalen Signale werden dabei unterschiedliche Frequenzbereich genutzt, um eine Interferenz der Signale zu verhindern. Da die Innenstation 16 nur digitale Geräte, d.h. nur die digitale Innenbereichssprechanlage 38, umfasst, können die digitalen Signale von der digitalen Innenbereichssprechanlage 38 direkt, ohne die Notwendigkeit einer vorherigen D/A-Wandlung, verarbeitet werden. Umgekehrt wird ein von der digitalen Innenbereichssprechanlage 38 erzeugtes digitales Signal, beispielsweise ein digitales Audiosignal, über die 2-Draht-Leitung 17 dem PLC-Standard entsprechend übertragen und an der Außenstation durch die Wandlereinheit 30 in ein analoges Audiosignal umgewandelt. Die analoge Außenbereichssprechanlage 18 kann anschließend das analoge Audiosignal verarbeiten und ausgeben.

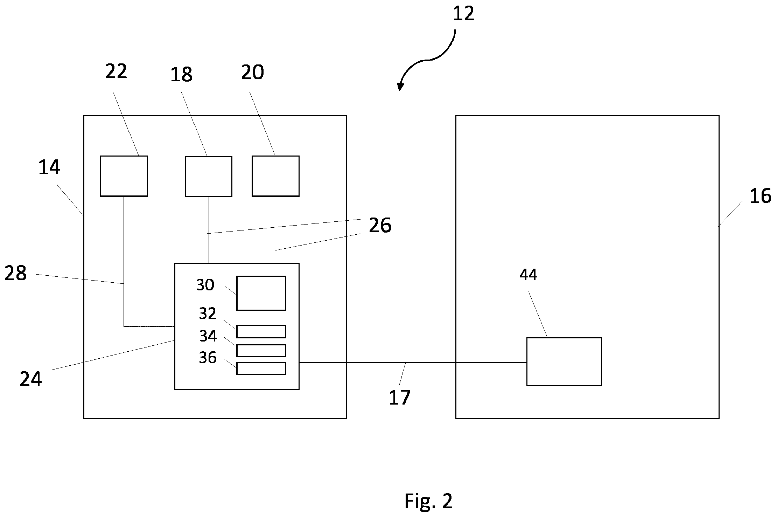

Fig. 2 zeigt eine zweite Ausführungsform einer Türsprechanlage 12, die sich von der ersten Ausführungsform der Fig. 1 dahingehend unterscheidet, dass die Innenstation 16 anstelle der digitalen Innenbereichssprechanlage 38 eine analoge Innenbereichssprechanlage 44 aufweist, welche ein Mikrofon und einen Lautsprecher umfasst. Im Gegensatz zu Fig. 1 wird nun das Anrufsignal mittels des Anrufmoduls 34 basierend auf dem bekannten TwinBus-Standard über die 2-Draht-Leitung 17 an die Innenstation 16 und die analoge Innenbereichssprechanlage 44 übermittelt. In Reaktion auf das Empfangen des digitalen Anrufsignals wird das digitale Anrufannahmesignal dem TwinBus-Standard entsprechend an die Außenstation 14 übermittelt. In Reaktion auf das Empfangen des digitalen Anrufannahmesignals an der Außenstation 14, wird nunmehr nur die analoge Außensprechanlage 18 aktiviert und überträgt ein entsprechendes analoges Audiosignale an das Außenstationsmodul 24, welches das analoge Audiosignal mittels des Audiomoduls 36 dem TwinBus-Standard entsprechend an die Innenstation 16 und die analoge Innenbereichssprechanlage 44 übermittelt. Auf die gleiche Weise werden die analogen Signale der analogen Innenbereichssprechanlage 44 über die 2-Draht-Leitung 17 dem TwinBus-Standard entsprechend an die Außenstation 14 übertragen, wobei die analogen Signale direkt, insbesondere ohne jegliche Signalwandlung, von der analogen Außenbereichssprechanlage 18 verarbeitet und ausgegeben werden.

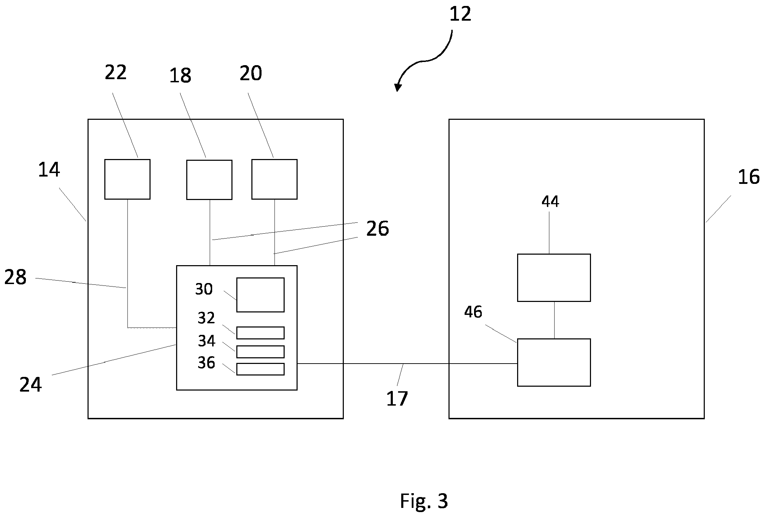

Fig. 3 veranschaulicht eine dritte Ausführungsform einer Türsprechanlage 12, welche sich von der zweiten Ausführungsform dahingehend unterscheidet, dass die Türsprechanlage 12 eine weitere Wandlereinheit 46 umfasst, welche ebenfalls einen A/D-Wandler zur A/D-Wandlung bzw. einen D/A-Wandler zur D/A-Wandlung umfasst und als ein Teil der Innenstation 16 ausgebildet ist. Die weitere Wandlereinheit 46 der Innenstation 16 und die Wandlereinheit 30 der Außenstation 14 sind dabei ausgebildet, gegenseitig nur digitale, dem PLC-Standard entsprechende Signale über die 2-Draht-Leitung 17 zu übertragen. Die weitere Wandlereinheit 46 der Innenstation 16 und die Wandlereinheit 30 der Außenstation 14 haben hierfür jeweils eine entsprechende PLC-Konformitäts-Ausgangsschnittstelle vorgesehen, welche ausschließlich PLC-Standard-konforme Signale passieren lässt. Die gesamte Kommunikation zwischen der Innenstation 16 und der Außenstation 14 erfolgt somit digital und dem PLC-Standard entsprechend. Folglich werden sowohl die analogen Signale, welche durch die analoge Außenbereichssprechanlage 18 erzeugt werden, als auch die analogen Signale, welche durch die analoge Innenbereichssprechanlage 44 erzeugt werden, vor einer Übertragung über die 2-Draht-Leitung 17 in jeweilige digitale, PLC-Standard entsprechende Signale gewandelt. Die von den Wandlereinheiten 30, 46 empfangenen digitalen Signale, welche einem umgewandelten analogen Audiosignal entsprechen, werden hingegen von der Wandlereinheit 30 bzw. der weiteren Wandlereinheit 46 in entsprechende analoge Signale umgewandelt, welche der analogen Außenbereichssprechanlage 18 bzw. der analogen Innenbereichssprechanlage 44 zugeführt werden.

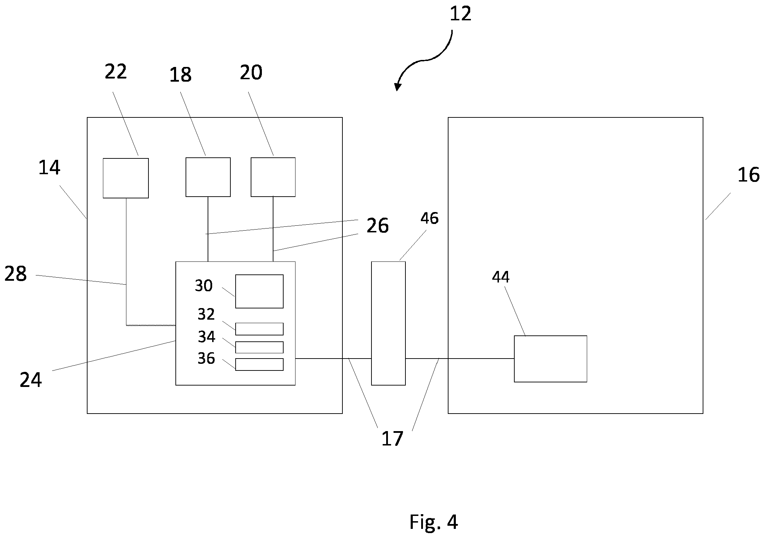

Fig. 4 zeigt eine vierte Ausführungsform der Erfindung, die sich von der dritten Ausführungsform dahingehend unterscheidet, dass die weitere Wandlereinheit 46 zwischen der Außenstation 14 und der Innenstation 16 angeordnet ist. Der Vorteil dieser Ausführungsform liegt darin, dass die von der Außenstation in einen Innenbereich des Gebäudes sicherheitskritische Übertragung der Signale rein digital erfolgt, indem, wie schon in der dritten Ausführungsform, die weitere Wandlereinheit 46 und die Wandlereinheit 30 der Außenstation 14 ausgebildet sind, gegenseitig nur digitale, beispielsweise dem PLC-Standard entsprechende Signale über die 2-Draht-Leitung 17 zu übertragen. Wie schon zu Fig. 3 beschrieben, kann die weitere Wandlereinheit 46 eine D/A-Wandlung oder A/D-Wandlung der empfangenen Signale vornehmen. Die weitere Wandlereinheit wandelt beispielsweise die von der Wandlereinheit empfangenen digitalen Signale, welche umgewandelten analogen Signalen der analogen Außenbereichssprechanlage 18 entsprechen, erneut in analoge Signale um, welche von der analogen Innenbereichssprechanlage 44 empfangen und verarbeitet werden, um ein entsprechendes Audiosignal auszugeben.

In einem digitalen System gibt es auch die Möglichkeit, dass eine digitale Außenbereichssprechanlage direkt über das PLC-Modul 32, z.B. einem PLC-Chipsatz, über die 2-Draht-Leitung 17 eine digitale Kommunikation startet, so dass digitale Endgeräte direkt einen entsprechenden Türanruf, insbesondere einen Audioanruf, empfangen. Für den Fall, dass analoge Endgeräte in dem Kommunikationssystem weiterhin verwendet werden sollen, kann zwischen der digitalen Außenbereichssprechanlage und den Endgeräten der Innenstation 16, beispielsweise in einem Schaltschrank des Gebäudes, die weitere Wandlereinheit 46 platziert werden, die den digitalen Türanruf der digitalen Außenbereichssprechanlage in einen analogen Türanruf wandelt. Ab diesem Punkt kann dieser parallel über dieselbe 2-Draht-Leitung 17 übertragen werden, über die auch der digitale Türanruf übertragen wird.

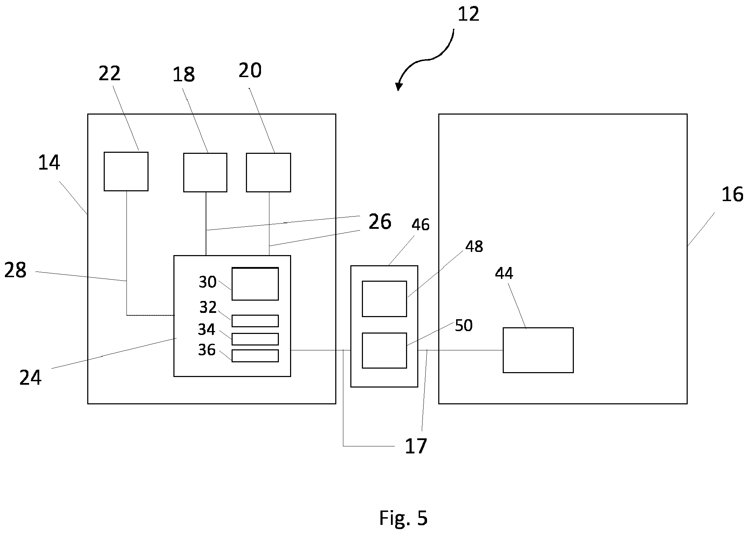

In Fig. 5 ist eine fünfte Ausführungsform einer Türsprechanlage 12 veranschaulicht, welche sich von der vierten Ausführungsform dahingehend unterscheidet, dass die weitere Wandlereinheit 46 ein erstes Modul 48 und ein zweites Modul 50 umfasst. Das erste Modul 48 ist ausgebildet, digitale Signale an die Innenstation 16, Außenstation 14 und an das zweite Modul 50 zu übertragen, wobei das zweite Modul 50 ausgebildet ist, von dem ersten Modul 48 empfangene digitale Signale in analoge Signale zu wandeln und an die Innenstation 16 zu übertragen und von der Innenstation 16 empfangene analoge Signale in digitale Signale zu wandeln und an das erste Modul 48 zu übertragen. Das erste Modul 48 ist also nur auf eine digitale Signalübertragung und -verarbeitung ausgelegt und erfüllt die Funktion eines Kommunikationsverteilers, während das zweite Modul 50 auch in der Lage ist, analoge Signale zu verarbeiten, indem es eine A/D- bzw. D/A-Wandlung durchführt. Das zweite Modul 50 ist außerdem als ansteckbares bzw. absteckbares Modul ausgebildet, d.h. es kann je nach Bedarf an die weitere Wandlereinheit 46 angesteckt bzw. von dieser abgesteckt werden.

### Bezugszeichenliste

- 12: Türsprechanlage
- 14: Außenstation
- 16: Innenstation
- 17: 2-Draht-Leitung
- 18: analoge Außenbereichssprechanlage
- 20: analoges Tastenfeld
- 22: digitale Kamera
- 24: Außenstationsmodul
- 26: analoge Leitungen
- 28: USB-Verbindung
- 30: Wandlereinheit
- 32: PLC-Modul
- 34: Anrufmodul
- 36: Audiomodul
- 38: digitale Innenbereichssprechanlage
- 40: digitale Anzeige
- 42: Touchdisplay
- 43: externe Spannungsversorgung
- 44: analoge Innenbereichssprechanlage
- 46: weitere Wandlereinheit
- 48: erstes Modul
- 50: zweites Modul

## Patentansprüche

1. Kommunikationssystem für ein Gebäude, insbesondere Türsprechanlage (12), umfassend:
zumindest eine Außenstation (14) mit zumindest einer digitalen und/oder zumindest einer analogen Kommunikationseinheit;
zumindest eine Innenstation mit zumindest einer digitalen und/oder zumindest einer analogen Kommunikationseinheit;
zumindest eine Kommunikationsleitung, welche die Außenstation (14) und
Innenstation (16) verbindet, wobei die Kommunikationsleitung zusätzlich als Energieversorgungsleitung dient; und
eine Wandlereinheit (30), die ausgebildet ist, von der analogen Kommunikationseinheit der Außenstation (14) und/oder Innenstation (16) erzeugte analoge Signale in digitale Signale umzuwandeln und/oder von der digitalen Kommunikationseinheit der Außenstation (14) und/oder Innenstation (16) erzeugte digitale Signale in analoge Signale umzuwandeln, wobei die Wandlereinheit (30) ferner ausgebildet ist, die umgewandelten analogen und/oder digitalen Signale über die Kommunikationsleitung an die Außenstation (14) und/oder Innenstation (16) zu übertragen.

2. Kommunikationssystem nach Anspruch 1,
wobei die Wandlereinheit (30) als ein Teil der Außenstation (14) oder Innenstation (16) ausgebildet ist.

3. Kommunikationssystem nach einem der vorstehenden Ansprüche, wobei die Wandlereinheit (30) als ein Teil der Außenstation (14) ausgebildet ist, wobei zwischen der Außenstation (14) und Innenstation (16) oder in der Innenstation (16) eine weitere Wandlereinheit (46) angeordnet ist, welche ausgebildet ist, analoge Signale in digitale Signale umzuwandeln und/oder umgekehrt, wobei die Wandlereinheit (30) und die weitere Wandlereinheit (46) ausgebildet sind, sich gegenseitig, insbesondere nur, digitale Signale zu übermitteln, wobei die weitere Wandlereinheit (46) ausgebildet ist, an die digitale Kommunikationseinheit der Innenstation (16) digitale Signale zu übertragen und/oder an die analoge Kommunikationseinheit der Innenstation (16) analoge Signale zu übertragen.

4. Kommunikationssystem nach einem der vorstehenden Ansprüche, wobei zumindest ein Teil der digitalen Signale einem Powerline-Kommunikations-Standard entsprechend über die Kommunikationsleitung übertragen wird.

5. Kommunikationssystem nach Anspruch 4,
wobei die Kommunikationsleitung zwischen der weiteren Wandlereinheit (46) und der analogen Kommunikationseinheit der Innenstation (16) eine erste Übertragungsleitung umfasst und/oder zwischen der weiteren Wandlereinheit (46) und der digitalen Kommunikationseinheit der Innenstation (16) eine zweite Übertragungsleitung umfasst,
wobei die weitere Wandlereinheit (46) ausgebildet ist, über die erste Übertragungsleitung, insbesondere nur, analoge Signale und digitale Telegrammsignale zu übertragen und zu empfangen, und über die zweite Übertragungsleitung, insbesondere nur, digitale Signale, welche einem Powerline-Kommunikations-Standard entsprechen, zu übertragen und zu empfangen.

6. Kommunikationssystem nach einem der Ansprüche 3 bis 5,
wobei die weitere Wandlereinheit (46) ein erstes Modul (48) und ein zweites Modul (50) umfasst, wobei das erste Modul (48) ausgebildet ist, digitale Signale an die Innenstation (16), Außenstation (14) und an das zweite Modul (50) zu übertragen, wobei das zweite Modul (50) ausgebildet ist, von dem ersten Modul (48) empfangene digitale Signale in analoge Signale zu wandeln und an die Innenstation (16) zu übertragen und von der Innenstation (16) empfangene analoge Signale in digitale Signale zu wandeln und an das erste Modul (48) zu übertragen.

7. Kommunikationssystem nach Anspruch 6,
wobei das erste Modul (48) und das zweite Modul (50) ausgebildet und eingerichtet sind, über eine Ethernet-Verbindung gegenseitig digitale Signale zu übertragen.

8. Kommunikationssystem nach einem der Ansprüche 3 bis 7,
wobei das Kommunikationssystem ferner eine Mehrzahl an Innenraum-Kommunikationseinrichtungen umfasst, welche einer Innenstation (16) zugeordnet sind, wobei die weitere Wandlereinheit (46) ausgebildet ist, als Kommunikationsschnittstelle die Innenraum-Kommunikationseinrichtungen miteinander zu verbinden.

9. Kommunikationssystem nach einem der vorstehenden Ansprüche, wobei eine zentrale Energieversorgung ausgebildet ist, die analoge Kommunikationseinheit der Außenstation (14) und/oder Innenstation (16) mit Energie zu versorgen, und wobei die digitale Kommunikationseinheit der Außenstation (14) und/oder die digitale Kommunikationseinheit der Innenstation (16) mit einer jeweiligen lokalen Energieversorgungseinheit ausgestattet ist, welche ausgebildet ist, die zughörige digitale Kommunikationseinheit mit Energie zu versorgen.

10. Kommunikationssystem nach einem der vorstehenden Ansprüche, wobei die Kommunikationsleitung eine 2-Draht-Leitung umfasst.

11. Kommunikationssystem nach einem der vorstehenden Ansprüche, wobei die Wandlereinheit (30) ausgebildet ist, analoge Signale in digitale Signale in einem Frequenzbereich von 2 MHz bis 20MHz zu wandeln und digitale Signale außerhalb des Frequenzbereichs von 2 MHz bis 20MHz in digitale Signale zu übersetzen, welche innerhalb des Frequenzbereichs von 2 MHz bis 20MHz liegen.

12. Verfahren zur Signalübertragung in einem Kommunikationssystem für ein Gebäude, das umfasst, dass:
von zumindest einer analogen Kommunikationseinheit zumindest einer Au-βenstation (14) und/oder zumindest einer Innenstation (16) erzeugte analoge Signale in digitale Signale umgewandelt werden und von zumindest einer digitalen Kommunikationseinheit der Außenstation (14) und/oder Innenstation (16) erzeugte digitale Signale in analoge Signale umgewandelt werden und die umgewandelten analogen und/oder digitalen Signale über zumindest eine Kommunikationsleitung zwischen der Außenstation (14) und der Innenstation (16) übertragen werden.

13. Verfahren nach Anspruch 12,
wobei die digitalen und analogen Signale, insbesondere gleichzeitig, über die Kommunikationsleitung in unterschiedlichen Frequenzbereichen übertragen werden.
